(19) **Europäisches Patentamt European Patent Office Office européen des brevets**

(11) **EP 1 454 132 B1**

(12) **FASCICULE DE BREVET EUROPEEN**

(45) Date de publication et mention de la délivrance du brevet:
**30.05.2012 Bulletin 2012/22**

(21) Numéro de dépôt: **02796910.4**

(22) Date de dépôt: **11.12.2002**

(51) Int Cl.:
**G01N 29/24** *(2006.01)*    **G01N 29/34** *(2006.01)*
**G01N 29/38** *(2006.01)*    **G01N 29/40** *(2006.01)*

(86) Numéro de dépôt international:
**PCT/FR2002/004296**

(87) Numéro de publication internationale:
**WO 2003/050527 (19.06.2003 Gazette 2003/25)**

(54) **CONTROLE NON DESTRUCTIF A CAPTEURS ULTRASONORES DE PRODUITS DE METALLURGIE**

ULTRASCHALLVORRICHTUNG ZUR ZERSTÖRUNGSFREIEN PRÜFUNG VON METALLURGISCHEN PRODUKTEN

NON-DESTRUCTIVE TESTING OF METALLURGICAL PRODUCTS BY ULTRASOUND

(84) Etats contractants désignés:
**AT BE BG CH CY CZ DE DK EE ES FI FR GB GR IE IT LI LU MC NL PT SE SI SK TR**
Etats d'extension désignés:
**RO**

(30) Priorité: **13.12.2001 FR 0116138**

(43) Date de publication de la demande:
**08.09.2004 Bulletin 2004/37**

(73) Titulaire: **VALLOUREC & MANNESMANN TUBES**
**92100 Boulogne-Billancourt (FR)**

(72) Inventeurs:
• **BISIAUX, Bernard**
  **F-59300 Valenciennes (FR)**
• **VAHE, Michel**
  **F-59138 Pont-sur-Sambre (FR)**
• **CRETENOT, Guillaume**
  **Quebec, Saint Romuald G6W8A9 (CA)**

(74) Mandataire: **Plaçais, Jean Yves et al**
**Cabinet Netter**
**36, avenue Hoche**
**75008 Paris (FR)**

(56) Documents cités:
**EP-A- 0 841 580      FR-A- 2 796 153**
**US-A- 4 404 853      US-A- 5 027 659**
**US-A- 5 533 401**

**Description**

L'invention concerne le contrôle non destructif, notamment en métallurgie, et plus particulièrement le contrôle non destructif des tubes.

La fabrication des tubes est rendue autant que possible complètement automatique. En sortie de fabrication, les tubes sont soumis à un contrôle non destructif par ultrasons, dans le but d'y détecter sélectivement un ou plusieurs défauts, à partir des tests suivants: défauts de surface d'orientations sensiblement longitudinale et/ou transversale, intérieurement et/ou extérieurement; défauts d'épaisseur et/ou dans l'épaisseur; on contrôle également les diamètres intérieur et extérieur.

De manière à contrôler entièrement le volume des tubes, les tubes sont animés d'un mouvement relatif hélicoïdal par rapport aux capteurs ultrasonores et les ultrasons sont émis en tirs, à cadence élevée, avec une fréquence de tir dite de "récurrence".

Le couplage du capteur au tube, indirect, s'effectue dans un liquide, en général de l'eau. En pratique, on prévoit, pour détecter les différents défauts précités, des capteurs à ondes ultrasonores longitudinales, qui "insonifient" le tube selon des angles d'incidence différents. Les angles d'incidence sont ajustés en fonction de nombreux paramètres, dont les dimensions du tube, ses propriétés de transmission ultrasonore, les types de défauts recherchés, etc.

La fréquence de récurrence des tirs est limitée par le temps de parcours aller et retour des ultrasons dans le liquide de couplage et dans le métal des tubes. Un temps de parcours élevé oblige alors à diminuer la fréquence de récurrence et, par là, la productivité du contrôle non destructif.

Selon certains modes de réalisations connus, les capteurs sont fixes et le tube est animé d'un mouvement hélicoïdal.

Selon d'autres modes de réalisation connus, les capteurs ou palpeurs à ultrasons sont entraînés en rotation à une vitesse de quelques milliers de tours par minute, autour d'un tube défilant à une vitesse linéaire qui peut aller jusqu'à environ 1 mètre par seconde.

Dans d'autres modes de réalisation connus encore, on utilise un capteur constitué d'une multiplicité d'éléments transducteurs ultrasonores entourant le tube. L'excitation successive de groupes d'éléments transducteurs permet de procéder à la "formation" d'un faisceau ultrasonore, auquel on peut associer un angle d'incidence sur le tube. Elle permet également de faire tourner le faisceau autour du tube par commutation des groupes d'éléments excités, et de remplacer, par voie de conséquence, la rotation mécanique des capteurs, décrite ci-dessus, par un balayage électronique (FR-A-2 796 153).

Un cas particulier de contrôle est celui des tubes sans soudure, obtenus par "perçage" à chaud de barres entre cylindres. Ce procédé de fabrication conduit à des défauts dits "obliques" ou encore en hélice, qui présentent une certaine obliquité par rapport à l'axe du tube. Cette obliquité peut-être positive ou négative, suivant le sens de l'hélice.

L'obliquité des défauts dépend de la gamme de fabrication qui est mise en oeuvre et, dans certains cas, du stade de formation du défaut. C'est ainsi qu'une même installation de contrôle peut alors devoir contrôler des défauts dont l'obliquité est susceptible de varier entre -20° et +20°, voire davantage.

Or, la moindre obliquité induit une forte atténuation des échos réfléchis par les défauts lorsque l'incidence du faisceau a été optimisée pour détecter des défauts strictement longitudinaux.

La demande de brevet EP 0 841 580 A2 décrit un appareil de test ultrasonore de couplage direct selon le préambule de la revendication indépendante 1.

Le brevet US 3 924 453 décrit des capteurs classiques qui font diverger mécaniquement le faisceau ultrasonore dans un plan passant par l'axe du tube (procédé dit du "divergent torique"). La fourchette d'obliquité détectable est toutefois limitée.

Par ailleurs, l'utilisation de capteurs multi-éléments permettant de former un faisceau ultrasonore, dont la déflexion est adaptée à détecter une obliquité de défaut donné, permet, en théorie, de résoudre ce problème. Il convient alors d'ajuster chaque tir de manière qu'à chaque tir corresponde une incidence optimale pour une obliquité donnée.

Chaque tir implique un temps de propagation dans l'eau à l'aller, un temps de propagation (un aller-retour, ou plusieurs) dans le tube et, à nouveau, un temps de propagation dans l'eau au retour. S'il est envisageable de multiplier les tirs en fonction du nombre d'incidences désirées, en fait, cette technique n'est guère applicable industriellement, notamment à cause des durées de propagation cumulées que la multiplication des tirs rend prohibitives. Ces durées de propagation cumulées sont des caractéristiques physiques qui ne peuvent diminuer dans le temps.

L'invention vient améliorer la situation, en augmentant la productivité de l'installation de contrôle, tout en conservant une bonne détectabilité des défauts, notamment des défauts obliques par rapport à l'axe du tube.

Elle propose à cet effet une installation de contrôle non destructif pour produits métallurgiques, en particulier à couplage indirect, comprenant :

- un dispositif capteur ultrasonore comprenant un ensemble d'éléments transducteurs ultrasonores (Ci), accessibles sélectivement,

- un circuit amont, propre à exciter sélectivement les éléments transducteurs à des instants choisis,
- un circuit aval, propre à recueillir les signaux captés en retour par les éléments transducteurs, et
- un composant de traitement (qui peut être incorporé au circuit aval) propre à analyser les signaux captés, en tant que réponse globale d'un produit métallurgique à une excitation ultrasonore.

Selon une caractéristique de l'installation:

- le circuit amont est agencé pour opérer par tirs, associés à une même loi temporelle d'excitation des éléments transducteurs,
- le circuit aval comprend une mémoire, et est agencé pour mémoriser des échantillons des signaux captés (Sij) par chaque élément transducteur, en correspondance de chaque tir, sur une profondeur temporelle choisie, et
- le composant de traitement est apte à coopérer avec cette mémoire afin:

  * pour chaque tir, de lire et sommer répétitivement des groupes d'échantillons (Sij) correspondant à différents éléments transducteurs (Ci), ainsi qu'à des instants (tj) décalés d'un élément à l'autre, et ceci selon une loi temporelle de traitement choisie, propre à chaque répétition, ce qui permet de calculer pour chaque tir une pluralité de réponses reconstituées ($S_T$, $\alpha_T$) dont chacune correspond à une déflexion $\alpha_T$ (multi-traitement), et
  * d'analyser la réponse globale constituée par l'ensemble de ces réponses reconstituées, et

les éléments transducteurs ultrasonores (Ci) sont de divergence ($\sigma$) au moins égale à l'angle de déflexion maximal, pour les différentes réponses reconstituées.
Ainsi, à partir d'un seul tir, il peut être déduit une pluralité de réponses ultrasonores correspondant chacune à une incidence "simulée", choisie a posteriori.
Selon l'un des avantages que procure la présente invention, la rapidité de l'analyse des produits métallurgiques n'est donc plus limitée qu'aux temps de traitement nécessaires.
Dans une réalisation avantageuse, le circuit aval comprend un bloc de numérisation des signaux captés, et la mémoire est agencée pour coopérer avec le bloc de numérisation en vue de stocker, en fonction d'instants successifs, d'une part, et d'éléments transducteurs actifs, d'autre part, les amplitudes des signaux captés par chaque élément transducteur.
Dans un mode de réalisation, le circuit aval comprend des moyens de calcul capables de définir une répartition de retards à appliquer respectivement aux signaux captés pour obtenir une réponse globale qui correspond à une émission suivant une déflexion de faisceau choisie.
Avantageusement, les moyens de calcul sont agencés en outre pour tenir compte des caractéristiques d'émission des éléments transducteurs, telles que la convergence des faisceaux émis par chaque élément, dans la définition de la répartition des retards à appliquer.
L'invention est susceptible de différentes variantes, notamment les suivantes, qui peuvent être combinées:

- à chaque tir d'émission, la loi temporelle d'excitation peut ne comporter aucun déphasage entre les éléments transducteurs; elle peut aussi inclure de tels déphasages; on peut encore prévoir les deux, c'est-à-dire un tir sans déphasage, et un ou quelques tirs avec déphasages, dès lors que l'on conserve le multi-traitement de chaque tir.
- le ou les tirs avec déphasages peuvent servir pour faciliter la définition a posteriori (au multi-traitement) de grandes déflexions de faisceau, pour lesquelles l'atténuation des ondes ultrasonores devrait être prise en compte.
- il est prévu un mouvement relatif hélicoïdal entre les tubes et le dispositif capteur ultrasonore, en déplaçant le tube ou le capteur ou les deux.
- le capteur peut être uni-dimensionnel, c'est-à-dire une barrette linéaire d'éléments transducteurs, disposée sensiblement parallèlement à l'axe de déplacement des tubes, ou bien une barrette au moins partiellement arquée (par exemple en tronc de cylindre, ou en tronc de secteur de cylindre), entourant le tube.
- le composant de traitement peut être agencé pour traiter les signaux de retour par groupes distincts d'éléments de la barrette. Ceci constitue à chaque fois un "capteur virtuel", à l'aide d'un sous-ensemble des éléments transducteurs du capteur. Ainsi, on fait tirer simultanément l'ensemble des éléments du capteur, tandis qu'à chaque tir on analyse a posteriori les signaux reçus par les différents capteurs virtuels, pour une (ou chaque) loi de déphasage voulue.
- le dispositif capteur ultrasonore peut comprendre un réseau bi-dimensionnel d'éléments transducteurs (non nécessairement plan). On peut y distinguer des colonnes et des rangées. Les colonnes et/ou les rangées peuvent être utilisées comme le capteur uni-dimensionnel précité. Un tel réseau bi-dimensionnel de capteurs est dit "mosaïque".
- le capteur mosaïque peut servir à détecter des défauts obliques, sans nécessité d'un déplacement relatif hélicoïdal physique. En effet, il permet une "rotation électronique" du faisceau. On entend par rotation "électronique" un traitement de différents capteurs virtuels, qui soit propre à balayer la circonférence des produits (au moins partiellement, le complément de rotation étant au besoin réalisé par déplacement physique). Le circuit aval est alors agencé pour calculer des répartitions de retards, à la fois entre les éléments d'une même rangée et entre les éléments d'une même colonne.

D'autres caractéristiques et avantages de l'invention apparaîtront à l'examen de la description détaillée ci-après, ainsi que des dessins annexés, sur lesquels:

- la figure 1 représente un tube T qui présente un défaut oblique D;

- la figure 2A représente un dispositif de contrôle à ultrasons, avec une incidence choisie dans un plan de coupe longitudinale du tube T passant par l'axe de celui-ci;

- la figure 2B représente un dispositif de contrôle par ultrasons avec une incidence choisie, dans un plan de coupe transversale du tube T;

- la figure 3 représente schématiquement des capteurs Ci et les retards $\tau i$ à appliquer pour créer une déviation $\alpha$, a priori, d'un rayon d'ultrasons R1;

- la figure 4 représente un diagramme montrant les incidences de faisceau d'ultrasons à appliquer pour une obliquité $\beta$ d'un défaut présent dans un tube;

- la figure 5 représente un tir ultrasonore, avec une colonne d'eau CE matérialisant l'interface entre le capteur C et le tube T, ce tir ultrasonore parcourant d'abord l'eau, puis le métal du tube T;

- la figure 6 représente schématiquement une installation pour la détection de défauts, au sens de la présente invention;

- la figure 7 représente schématiquement la divergence $\delta$ d'un faisceau F1 qu'émet un capteur ultrasonore C, de largeur donnée L;

- la figure 8 représente schématiquement les intensités sélectionnées dans les signaux reçus, sans tenir compte d'une focalisation appliquée au faisceau d'ultrasons (hachures verticales) et en tenant compte de cette focalisation (hachures horizontales);

- la figure 9 représente un diagramme des durées globales de propagation des ondes ultrasonores et des durées de calcul (ordonnées en microsecondes) en fonction du nombre d'obliquités de défauts pouvant être détectées (en abscisses), selon la technique de l'art antérieur (traits interrompus courts et longs) et selon l'invention (trait continu) et par un procédé optimisé, au sens de la présente invention (traits interrompus);

- la figure 10 représente l'amplitude d'un signal reçu (à partir d'un faisceau initial non dévié) pour plusieurs obliquités $\beta$ d'un défaut détecté avec un capteur selon la figure 6 et un capteur standard utilisé dans une technique classique (courbes en traits pointillés);

- les figures 10B et 10A sont des courbes de signaux A-SCAN obtenues sur des défauts obliques respectivement par une technique selon l'invention et par une technique de tirs démultipliés de l'art antérieur;

- la figure 11 représente la perte de sensibilité (par atténuation acoustique) pour de grandes obliquités visées, avec la technique de tirs démultipliés (courbe en trait plein) et la technique à tir unique selon l'invention (courbe en traits pointillés); et

- la figure 12 représente un dispositif de contrôle à ultrasons, dans une réalisation utilisant un capteur en arc;

- la figure 13 représente un dispositif de contrôle à ultrasons, dans une réalisation utilisant un capteur "mosaïque";

- la figure 14 représente la réponse d'une entaille en fonction des positions relatives de l'entaille et de la barrette, pour des capteurs virtuels juxtaposés et composés de 8 éléments; et

- la figure 15 représente la réponse d'une entaille en fonction des positions relatives de l'entaille et de la barrette, pour des capteurs virtuels imbriqués à 50% et composés de 8 éléments.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

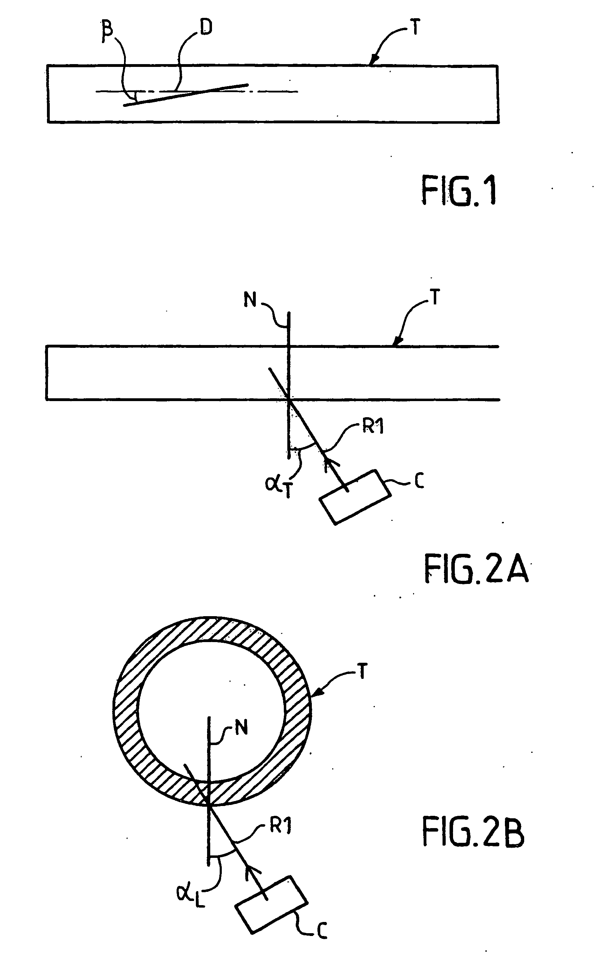

On se réfère tout d'abord à la figure 1 sur laquelle un tube T en sortie d'une chaîne de fabrication présente un défaut oblique D, d'obliquité β par rapport à l'axe longitudinal du tube. En particulier, dans un procédé de fabrication de tubes, sans soudure, dans lequel on perce à chaud des barres métalliques entre cylindres, les tubes T présentent parfois de tels défauts, en hélice, avec une certaine obliquité β par rapport à l'axe du tube T.

En se référant à la figure 2A, un dispositif de contrôle non destructif de tubes T comprend un dispositif capteur C, constitué d'un ou plusieurs éléments transducteurs ultrasonores, qui «insonifie» le tube T par émission ultrasonore, à une cadence de tir, dite fréquence de récurrence, par exemple voisine de 4 KHz. En principe, le couplage entre le capteur ultrasonore et le tube métallique T est indirect. Une colonne de liquide, en particulier de l'eau, est générée entre le capteur C et le tube, de sorte que les ondes ultrasonores qu'émet le capteur se propagent d'abord dans l'eau, puis dans le tube.

L'incidence du faisceau d'ultrasons émis par les capteurs C peut être définie, dans l'espace, par deux angles d'incidence. En se référant à la figure 2A, un rayon incident R1 forme avec une normale du tube N un angle $\alpha_T$ (déflexion axiale ou longitudinale) dans un plan de coupe longitudinale du tube T, ce plan comprenant l'axe du tube. Le deuxième angle qui permet de définir une incidence de faisceau est l'angle $\alpha_L$ de la figure 2B. Le rayon R1 qu'émet le capteur C forme un angle $\alpha_L$, par rapport à la normale N du tube T. Cet angle $\alpha_L$ (déflexion transverse) est défini dans un plan de coupe transversal, perpendiculaire à l'axe du tube T.

Le défaut D est en principe situé sur la surface extérieure ou intérieure du tube T ou au voisinage de ces surfaces. Il comprend une composante longitudinale, ainsi qu'une composante transversale, dont la proportion est fonction de l'angle β du défaut. Cette obliquité β est définie par rapport à une génératrice du tube cylindrique T, parallèle à l'axe du tube et peut être positive ou négative.

Le tube lui-même a généralement un mouvement hélicoïdal relatif par rapport au capteur C de manière à contrôler sensiblement la totalité de la surface du tube. Le long de l'axe du tube, la composante du mouvement hélicoïdal relatif est rectiligne, à vitesse sensiblement constante pouvant aller jusqu'à environ 1 mètre/seconde. La composante rotative du mouvement hélicoïdal relatif peut être engendrée par la rotation du capteur autour de l'axe du tube ou par une rotation du tube autour de son axe, le capteur étant fixe, ou encore par une combinaison de ces deux rotations. Dans les deux cas, on oriente le capteur pour qu'il tire sur le tube selon une déflexion transverse $\alpha_L$ voisine de 17 pour détecter des défauts longitudinaux ou selon une déflexion axiale $\alpha_T$ voisine de 17° pour détecter des défauts transversaux. Ces déflexions $\alpha_L$ et $\alpha_T$ ont des valeurs différentes pour un milieu de propagation autre que l'eau et pour des tubes de matière autre que l'acier. L'orientation peut-être préétablie (non réglable) ou réglable mécaniquement dans une certaine mesure, mais l'ajustement est long et délicat.

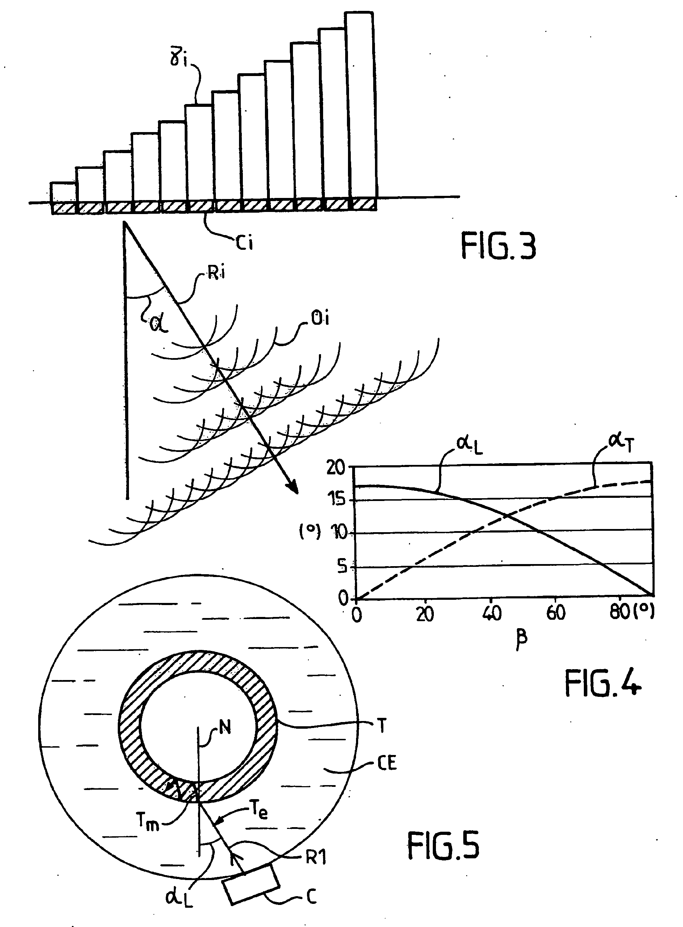

Dans une technique récente, plus évoluée, on utilise une pluralité d'éléments transducteurs Ci (figure 3), dont la normale est perpendiculaire au tube. On applique aux éléments transducteurs des retards d'émission respectifs τi, de manière à créer un déphasage entre les ondes élémentaires respectives émises Oi, ce qui se traduit par une différence de marche entre les ondes respectives émises Ri. Le faisceau qui résulte de l'ensemble des ondes émises présente alors une énergie maximale selon une déflexion α, gérée électroniquement par la commande de l'instant d'émission des éléments Ci. C'est ainsi que l'ensemble des retards appliqués τi définit une répartition des retards, dite loi de phase ou loi temporelle, sur le réseau de capteurs Ci et, par suite, la déflexion α du faisceau d'émission résultant des différentes ondes émises Ri.

Les éléments transducteurs sont disposés sur une barrette. Connaissant le pas pe entre chaque élément Ci, on peut construire la répartition des retards à appliquer à l'émission sur les différents éléments (loi de phase) pour obtenir une déflexion α donnée, à partir de la formule (1):

$$\textbf{sin } \alpha \textbf{ = V.dt / pe,}$$

dans laquelle dt est le retard à appliquer entre les deux éléments consécutifs et v correspond à la vitesse d'une onde longitudinale ultrasonore dans l'eau (V=1490 m.s⁻¹). Le faisceau ainsi formé et défléchi de α arrive sur le tube selon l'incidence α, autrement dit angle d'incidence sur le produit est pratiquement l'angle de déflexion du faisceau.

Pour écouter le signal de manière optimale, c'est-à-dire dans la direction de l'incidence d'émission, on applique la même loi de phase aux signaux réfléchis par un défaut et reçus en retour par les différents éléments Ci.

On peut également exciter des groupes successifs d'éléments Ci pour réaliser un balayage électronique, par exemple autour du tube, si les éléments Ci sont en arc de cercle ou équivalent.

D'une manière générale, les défauts obliques sont difficiles à détecter en même temps que les défauts longitudinaux, notamment parce qu'une incidence optimisée du faisceau d'ultrasons pour le contrôle des défauts longs produit une réponse fortement atténuée sur des défauts obliques, même faiblement obliques. Par exemple, l'atténuation dépasse généralement un facteur 2, pour une obliquité de défaut de 5°. Or on cherche ici à détecter simultanément les défauts longitudinaux et obliques (si possible, avec une obliquité comprise entre + 35° et - 35° au minimum, sans perte rédhibitoire de sensibilité).

La détection des défauts obliques nécessite alors d'adapter les angles $\alpha_L$ et $\alpha_T$, qui varient avec l'obliquité d'un défaut. En effet, en se référant à la figure 4, il apparaît que l'optimal pour détecter un défaut longitudinal ($\beta = 0$) correspond à 17° pour l'angle $\alpha_L$, tandis que l'angle $\alpha_T$ est nul. Ces valeurs de $\alpha_L$ et $\alpha_T$ sont inversées, bien entendu, pour une obliquité du défaut de 90° (défaut transverse). Par exemple, pour une obliquité $\beta$ de 45°, les angles $\alpha_L$ et $\alpha_T$ correspondent à des déflexions d'environ 12°, dans un plan transversal et dans un plan longitudinal (figure 2A et figure 2B), respectivement.

En fait, pour des obliquités inférieures à 30°, les variations de l'angle $\alpha_L$ sont relativement faibles et peuvent être négligées (variation de 3° d'angle au plus dans le début de la décroissance de $\alpha_L$ en fonction de l'obliquité $\beta$). En revanche, l'introduction d'un angle $\alpha_T$ permet de détecter les défauts obliques, avec une obliquité inférieure à 30° en valeur absolue.

Ainsi, quand on cherche à détecter des défauts obliques, on est amené à fixer la valeur de $\alpha_L$ à 17° et à faire varier $\alpha_T$ dans le plan de coupe longitudinale du tube T, par exemple dans une plage de débattement comprise entre - 10° et + 10° pour détecter les différentes obliquités possibles, y compris l'obliquité nulle (défauts longitudinaux).

Pour détecter des défauts obliques, le brevet US 3 924 453 propose un procédé optique (dit de divergent torique) qui consiste à faire diverger, au moyen d'une lentille, le faisceau dans le plan longitudinal du tube et, par contre, à focaliser ce faisceau dans le plan perpendiculaire (plan de la figure 2B). On accède ainsi à un champ de détection, relativement limité, de l'ordre de 10° autour d'une obliquité visée (-10°< $\alpha_T$ < +10°). En outre, ce procédé présente l'inconvénient d'une sensibilité variable selon l'obliquité. On peut donc détecter des imperfections qui seraient acceptables et laisser passer des défauts inacceptables.

Un autre procédé selon la présente invention consiste à former un faisceau défléchi d'un angle $\alpha_T$ au moyen d'un capteur en forme de barrette comportant une multiplicité d'éléments transducteurs, tandis que l'angle $\alpha_L$ est fixé par la configuration de la cellule (préférentiellement voisin de 17°).

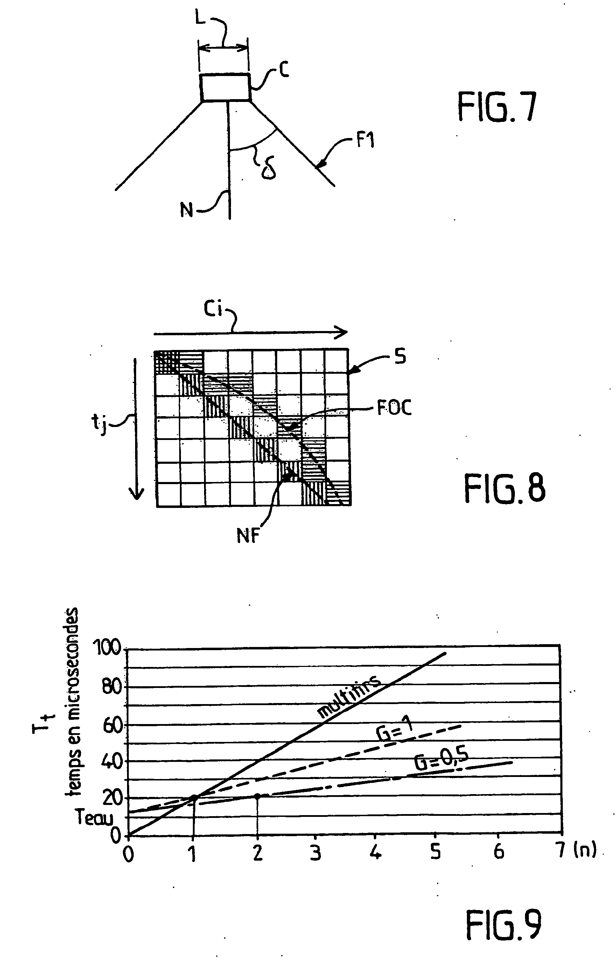

En se référant à la figure 7, un capteur C émet en effet un faisceau F1 d'ultrasons, dont le bord extrême forme, avec la normale au capteur C, un angle $\delta$, dit angle de divergence (ou d'ouverture). La divergence $\delta$ est donnée par la formule (2):

$$\sin \ \delta = 1{,}22 \ \lambda \ / \ L,$$

où $\lambda$ est la longueur d'ondes du faisceau dans l'eau et L la largeur d'un élément transducteur du capteur (figure 7). En tout état de cause, la divergence reste supérieure à l'angle $\alpha_T$ maximum (11°) pour détecter des obliquités de $\beta$=30°. On utilise avantageusement cette divergence pour atteindre les valeurs $\alpha_T$ souhaitées.

Par exemple, pour des ultrasons émis dans l'eau à 5 MHz avec des éléments Ci de largeur 1,4 mm d'une barrette linéaire, $\delta$ vaut environ 15°.

En utilisant une loi de phase appropriée à l'émission des éléments Ci selon la formule (1) et la figure 3, on peut former un faisceau défléchi d'un angle $\alpha_T$, tant que la valeur de $\alpha_T$ est inférieure à la divergence $\delta$ donnée par la formule (2). Il est alors possible d'ajuster "électroniquement" $\alpha_T$, en modifiant la loi de phase, sans qu'il soit nécessaire d'orienter le capteur dans cette direction. On applique alors la même loi de phase aux signaux reçus en retour et on somme les signaux reçus en retour ainsi déphasés pour obtenir une réponse globale maximisée.

Ce procédé, envisagé par la Demanderesse, permet de viser une obliquité donnée, avec une sensibilité correcte et connue, et d'avoir une réponse homogène pour les différentes obliquités possibles des défauts du tube. Le tableau de l'annexe A1 contient les résultats des essais préliminaires de déflexion $\alpha_T$ du faisceau en vue de détecter des défauts obliques (méthode multi-tirs).

Plus précisément, ces résultats portent sur l'amplitude des échos obtenus en retour pour différentes obliquités de défauts et différentes valeurs de déflexion $\alpha_T$ du faisceau et sur les valeurs de gain d'amplification des signaux. Les valeurs indiquées en gras correspondent aux valeurs de déflexion à utiliser pour détecter une obliquité donnée. On constate que les résultats obtenus pour les gains d'amplification sont satisfaisants (23,5 dB pour l'entaille à 25°).

On peut, en outre, compenser la variation de sensibilité de détection en fonction de la déflexion utilisée et donc réaliser une sensibilité uniforme de détection de défauts quelle que soit leur obliquité.

En revanche, pour chaque obliquité visée, il est nécessaire d'effectuer un tir groupé des éléments transducteurs du capteur. Ainsi, si plusieurs obliquités de défauts sont recherchées, un même nombre de tirs d'ultrasons doit être prévu, puisqu'une loi de retard spécifique à l'émission et à la réception doit être prévue pour chaque obliquité visée.

En se référant à la figure 5, un tir ultrasonore R1 se compose d'un parcours dans l'eau $T_e$, suivi d'un parcours

dans le tube $T_m$ (parcours utile), ces parcours étant de durées proportionnelles à l'épaisseur des matériaux franchis. Pour des raisons acoustiques, la colonne d'eau CE qui baigne l'interface entre le capteur C et le tube T est telle que le temps de parcours dans l'eau est supérieur au temps de parcours dans le métal du tube.

En particulier, le temps total d'un tir ultrasonore $T_t$ est donné par la relation:

$$T_t = T_e + T_m, \text{ avec } T_e > T_m.$$

Dans l'application à la détection multi-tirs des défauts obliques, si n est le nombre total d'obliquités visées, le temps total $T_t$ devient:

$$T_t = n.(T_e + T_m)$$

Pour des cadences de tirs industriels classiques (voisines de 4 KHz pour effectuer un simple contrôle des défauts longitudinaux), on ne peut détecter qu'environ une ou deux obliquités, outre les défauts longitudinaux par la technique des tirs multiples dans le cas de tubes relativement épais (environ 36 mm d'épaisseur), compte tenu des temps de propagation des faisceaux ultrasonores.

La détection des défauts obliques, au sens de la présente invention, se base sur un principe encore différent.

Selon l'invention, on commande les éléments transducteurs Ci d'une barrette linéaire disposée parallèlement à l'axe du tube de sorte qu'à l'émission, tous les éléments sont activés en même temps (sensiblement sans déphasage). Autrement dit, la "déflexion physique à l'émission" est nulle. En revanche, une déflexion "virtuelle" du faisceau est construite sur les signaux de retour, en décalant les instants auxquels sont sommés les signaux reçus, pour chaque élément Ci.

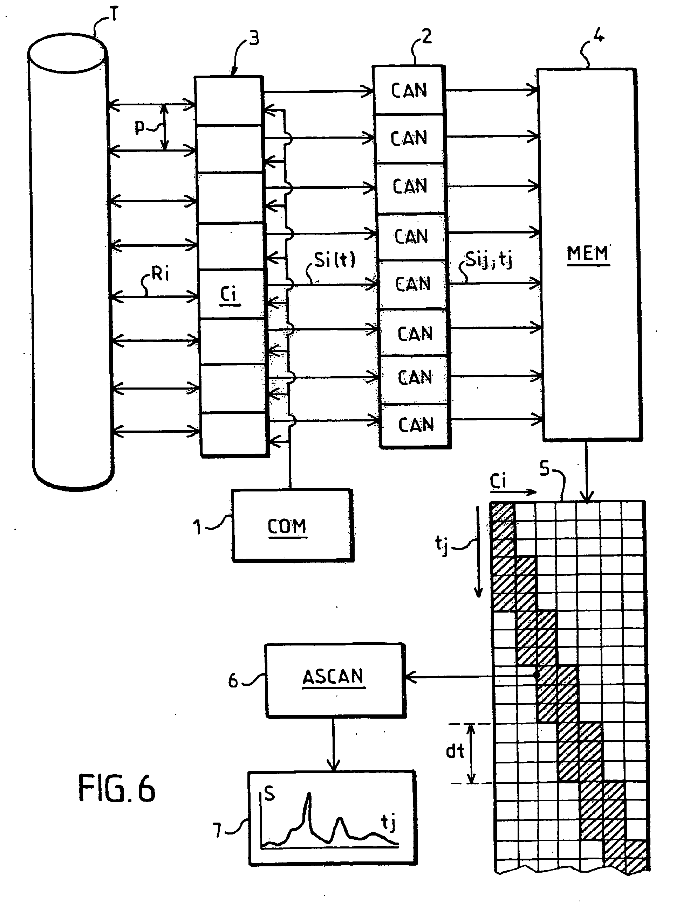

En se référant à la figure 6, les éléments transducteurs Ci du capteur sont agencés, dans l'exemple décrit, selon une barrette 3. Cette barrette est fixe dans l'installation de contrôle et sa direction générale est parallèle à l'axe du tube T à contrôler. Cette barrette est inclinée d'un angle $\alpha_L$ voisin de 17° par rapport à la normale au tube dans un plan de coupe transversale du tube T (plan de la figure 2B) et le tube T est animé d'un mouvement hélicoïdal le long de son axe. Cet angle $\alpha_L$ de 17° correspond à l'angle optimal $\alpha_L$ pour la détection de défauts de faible obliquité ($\beta$ inférieur à environ 30°).

Les éléments Ci sont excités par un circuit de commande 1 pour émettre chacun une onde ultrasonore impulsionnelle Ri de fréquence ultrasonore de l'ordre de 5 MHz. Préférentiellement, les éléments Ci sont commandés de sorte qu'ils émettent en même temps, c'est-à-dire sensiblement sans déphasage. Les ondes ultrasonores réfléchies par un défaut et captées en retour par chaque élément Ci sont converties en signaux électriques Si(t). Ces signaux analogiques Si(t) sont convertis respectivement par des convertisseurs analogiques/numériques 2, fonctionnant par exemple à 10 fois la fréquence ultrasonore, soit 50 MHz.

Les convertisseurs analogiques/numériques 2 sont connectés à une mémoire 4, pour stocker sur une profondeur temporelle de plusieurs dizaines de microsecondes des données numériques constituant des échantillons de signal Sij (par exemple en amplitude), associées respectivement à des instants tj. Dans la notation Sij, l'indice i correspond à un identifiant d'élément Ci dans la barrette 3, tandis que l'indice j correspond à un identifiant d'instant tj.

Un module de calcul dans l'installation sélectionne dans la mémoire 4 une pluralité d'échantillons de signaux Sij décalés, d'une part, en fonction de l'indice i des éléments Ci et, d'autre part, en fonction des instants successifs tj et somme les échantillons de signaux décalés. La sommation peut se faire par exemple en amplitude instantanée, ou de toute autre manière appropriée.

L'encadré qui porte la référence 5 dans la figure 6 illustre, à titre d'exemple, la manière dont sont effectués les calculs ainsi que la structure de la mémoire 4. L'organe 5 peut être considéré comme un circuit ou composant de traitement (ou encore comme un module de traitement, sans que le mot module implique une quelconque individualisation).

La mémoire 4 est préférentiellement rangée en adresses associées à un indice de colonne i (correspondant aux éléments Ci) et à un indice de ligne j (correspondant aux instants successifs tj).

Le module de traitement 5 calcule les retards dt à appliquer entre des colonnes i successives, selon la formule (1), par la déflexion $\alpha_T$:

$$dt = pe.\sin \alpha_T /V$$

Les valeurs de retard dt sont de l'ordre de plusieurs dizaines de nanosecondes.

Le module de traitement sélectionne ensuite, avec une précision de l'ordre de la nanoseconde, des valeurs de Sij, dans un ensemble de colonnes d'éléments Ci, décalées temporellement. Il effectue ensuite la somme de ces échantillons à chaque instant tj, pour définir un signal de réponse reconstitué pour la déflexion $\alpha_T$:

$$S_{tj}(\alpha_T) = S_{1,\ j} + S_{2,\ j+2\ dt} + S_{3,\ j+4dt} + \ldots\ldots\ldots\ldots + S_{n,\ j+2(n-1)dt}$$

Une telle sommation permet de remettre en phase au niveau des éléments transducteurs des signaux émis au même moment ayant subi des parcours avec des temps de parcours qui diffèrent de dt à l'aller et de dt au retour entre deux éléments.

Après avoir calculé la valeur de dt selon la formule (1), on utilise la sommation effectuée ci-dessus pour maximiser l'énergie du faisceau dans la direction de la déflexion $\alpha_T$.

Le tableau de l'annexe A2 comporte les résultats d'essais de déflexion $\alpha_T$ du faisceau pour détecter des défauts obliques, par la méthode selon la présente invention. Il permet de déterminer les valeurs de double déflexion ($2\alpha_T$) correspondant à des déphasages de (2dt) à l'aller et au retour. Pour différentes obliquités, la valeur ($2\alpha_T$) à utiliser correspond aux valeurs d'amplitudes indiquées en gras dans le tableau. Ce tableau fournit également les valeurs de gain pour les différentes valeurs de $\alpha_T$. Ces valeurs sont acceptables même pour de grandes valeurs de $\alpha_T$.

Dans ce qui précède, on a considéré un écart temporel dt constant entre les instants successifs tj, ce qui correspond à une loi de retards linéaire NF (figure 8) avec dt constant. Cette loi ne tient pas compte cependant d'une focalisation que l'on est susceptible d'appliquer au faisceau d'ultrasons sur le tube. Pour tenir compte de cette focalisation dans la loi des retards, le déphasage dt décroît jusqu'à un minimum puis croît jusqu'à la valeur initiale. En se référant à la figure 8, les intensités Sij sélectionnées forment, pour un temps tj, dans la matrice 5 de colonnes Ci et de lignes tj, une ligne FOC incurvée.

Les moyens de traitement permettent de calculer une réponse reconstituée pour différents angles de déflexion $\alpha_T$.

Le module 6 de l'installation récupère les signaux de réponses reconstituées St($\alpha_T$) pour mettre en forme un signal directement utilisable par un dispositif de visualisation 7 (écran de visualisation ou autre). Le dispositif 7 représente alors un signal dit "A-SCAN" comportant des impulsions d'échos ultrasonores reconstituées en fonction du temps et pour une ou plusieurs déflexions choisies $\alpha_T$.

Selon l'un des avantages que procure la présente invention, le temps total $T_t$ pour viser n obliquités, avec les notations précédemment employées, est alors donné par:

$$T_t = T_e + T_m + n \cdot T_{calc},$$

$T_{calc}$ étant le temps de calcul qui peut s'exprimer en fonction de $T_m$, d'où

$$T_t = T_e + n \cdot G \cdot T_m,$$

où G est un coefficient représentant la vitesse de traitement par la chaîne comprenant les convertisseurs analogiques/numériques, la mémoire 4, la sélection des intensités dans le jeu d'intensités stockées, etc. Ainsi, plus G est faible, plus la vitesse de traitement est importante.

Selon l'un des avantages que procure la présente invention, on supprime ainsi le temps de parcours dans l'eau pour (n-1) obliquités.

Avec les moyens électroniques et informatiques actuels, G est toujours inférieur à 1 et peut être inférieur à 0,5 avec des électroniques ultra-rapides. Ainsi, les limitations ne sont plus acoustiques mais électroniques car le facteur limitant devient, dans la présente invention, le temps de calcul que nécessite les traitements ci-avant. Les limitations ne sont alors plus physiques mais évolutives avec les progrès sur la rapidité des circuits électroniques.

La figure 9 représente, pour une épaisseur du tube donnée, les durées totales Tt pour la détection des défauts obliques, en fonction du nombre d'obliquités contrôlées n. Ce graphique est établi en utilisant la technique de l'art antérieur avec démultiplication des tirs (déphasage entre les éléments Ci, dès l'émission, pour chaque déflexion $\alpha_T$, ce qui correspond à la courbe en traits interrompus longs et courts). On utilise également la technique selon l'invention avec un facteur G de 1 (courbe en trait plein) relative à une électronique standard et avec un facteur G de 0,5 (courbe en trait pointillé) relative à une électronique ultra-rapide.

On remarque ainsi que plus le facteur G est faible, plus le temps nécessaire pour viser plusieurs obliquités est court, ce qui permet d'augmenter la vitesse de contrôle des tubes, en particulier dans une chaîne de contrôle de tubes en sortie d'usinage.

Le dispositif capteur a une longueur adaptée au pas de contrôle de l'installation, soit une longueur de l'ordre de 100 mm dans l'exemple. Or les défauts à détecter ont une longueur qui peut-être nettement plus faible, par exemple de 20 mm. Un défaut de longueur 100 mm, soit de longueur équivalente à la barrette (3) crée un signal sur chacun des éléments de la barrette et donc un signal reconstitué intense, par sommation. En revanche un défaut de 20 mm crée un signal sur 20% des éléments de la barrette et donc un signal reconstitué 5 fois moins intense que celui pour un défaut de 100 mm.

Une imperfection de 100 mm de long non rédhibitoire pourra de ce fait être détectée et un défaut de 20 mm peu ou pas détecté.

Pour compenser cet inconvénient, on utilise une solution qui consiste à effectuer le traitement que sur quelques éléments de la barrette, pour un même tir de tous les éléments de la barrette. Par exemple, on peut effectuer le traitement sur un arrangement de 8 éléments d'une barrette de 64 éléments, et recommencer le traitement sur d'autres arrangements de 8 éléments de la barrette. Le groupe des 8 éléments s'appelle "capteur virtuel".

Chaque arrangement donne bien, après sommation des signaux Sij sur les 8 éléments, un signal de réponse reconstituée élémentaire pour la déflexion $\alpha_T$. On peut retenir comme réponse reconstituée globale, le signal reconstitué élémentaire parmi les signaux reconstitués des divers arrangements, qui présente une amplitude de pic maximale. Chaque arrangement d'éléments de "capteur virtuel" se déduit du précédent par translation d'un pas pi, dit pas d'imbrication.

Soit $N_T$ le nombre total d'éléments de la barrette et $N_v$ le nombre d'éléments transducteurs du capteur virtuel. Lorsque le pas d'imbrication est compris entre 1 et $N_v$, en restant strictement inférieur à $N_v$, il y a chevauchement ou imbrication des arrangements du capteur virtuel. Lorsque le pas d'imbrication pi est égal à $N_v$, les arrangements du capteur sont disposés côte à côte. Lorsque le pas d'imbrication est supérieur à $N_v$ et inférieur à $N_T$, les différents arrangements ne réalisent pas une couverture totale des éléments du capteur.

On effectue un nombre maximal de fois le traitement des signaux sur les $N_v$ éléments du capteur virtuel. Le nombre d'arrangements possibles est donné par la formule (3):

$$\texttt{N = troncature } \{(N_T - N_v) \text{ / pi}\} + 1$$

Par exemple,

- si $N_T = 64$, $N_v = 8$ et pi = 1, alors N = 57. Dans ce cas, deux arrangements successifs ont 7 éléments en commun.
- si $N_T = 64$, $N_v = 8$ et pi = 8, alors N = 57. Dans ce cas, deux arrangements successifs n'ont aucun élément commun.
- si $N_T = 64$, $N_v = 8$ et pi = 4, alors N = 57. Dans ce cas, deux arrangements successifs ont 4 éléments en commun, ce qui correspond à un recouvrement de 50 % des arrangements successifs.

Après avoir retenu comme réponse reconstituée globale des N arrangements, celle qui présente une amplitude maximale de pic pour la déflexion $\alpha_T$ cherchée, on peut de même effectuer les calculs pour d'autres valeurs de la déflexion $\alpha_T$.

En variante, on peut déterminer d'abord les différents signaux de réponse reconstituée élémentaire pour différents angles $\alpha_T$ et un arrangement de capteur virtuel puis effectuer les mêmes calculs pour les autres arrangements.

On déterminera, dans tous les cas, la réponse reconstituée globale pour une déflexion donnée, en retenant la réponse élémentaire qui fournit, pour cette déflexion, une amplitude de pic maximale.

Lorsque l'on traite les arrangements de capteurs virtuels qui sont situés aux extrémités de la barrette, le signal de réponse est perturbé par l'absence d'éléments de part et d'autre du capteur virtuel. C'est pourquoi, il est préférable d'éliminer ($N_v$/2) éléments à chaque extrémité de la barrette, des divers arrangements de capteur virtuel.

Le nombre maximal d'arrangements se réduit alors à:

$$\texttt{N' = troncature } \{ (N_T - 2 \ N_v)\text{/pi}\} + 1$$

Comme le montre le tableau de l'annexe A2, le signal reconstitué global est amplifié de manière différente pour chaque valeur de $\alpha_T$, afin que la rigueur du contrôle soit équivalente pour les différentes valeurs de $\alpha_T$.

En variante, le gain d'amplification pourra être uniforme, tandis que le seuil de déclenchement du défaut est adapté à chaque valeur $\alpha_T$.

La Demanderesse a effectué des essais "statiques" de contrôle de défauts obliques, sur un tube en acier, de 96 mm de diamètre et de 12 mm d'épaisseur. Des entailles d'environ 5 % de l'épaisseur du tube ont été formées pour simuler des défauts obliques. L'obliquité des entailles est comprise entre 0° et 25° et leur longueur dans le sens longitudinal est d'environ 12mm.

Les capteurs utilisés sont commercialisés par la société Imasonic sous la dénomination Imasonic (marque déposée). Le pas pe entre les éléments est de 1,5mm (avec 1,4mm de largeur L pour un élément). Le dispositif comprend en tout 32 éléments, avec une focalisation mécanique de 50mm dans l'eau. Dans un exemple de cellule utilisée, la déflexion $\alpha_L$ peut être fixée mécaniquement à 17°. L'électronique mise en oeuvre est une électronique de marque RDTech de type Focus 32/128 capable de gérer 32 éléments en parallèle.

Compte tenu de la géométrie des éléments transducteurs, leur divergence $\delta$ est de l'ordre de 15°, et est tout à fait adaptée aux valeurs de déflexion à mettre en oeuvre pour détecter des défauts obliques pour une obliquité comprise entre -25° et +25°.

Les essais statiques ont été effectués à partir d'un capteur virtuel de 8 éléments pour analyser le signal en retour. Le défaut est disposé au droit du capteur virtuel. Un tel capteur virtuel a une longueur d'écoute de 9 mm environ, bien adaptée à la longueur de défaut étudié (12 mm).

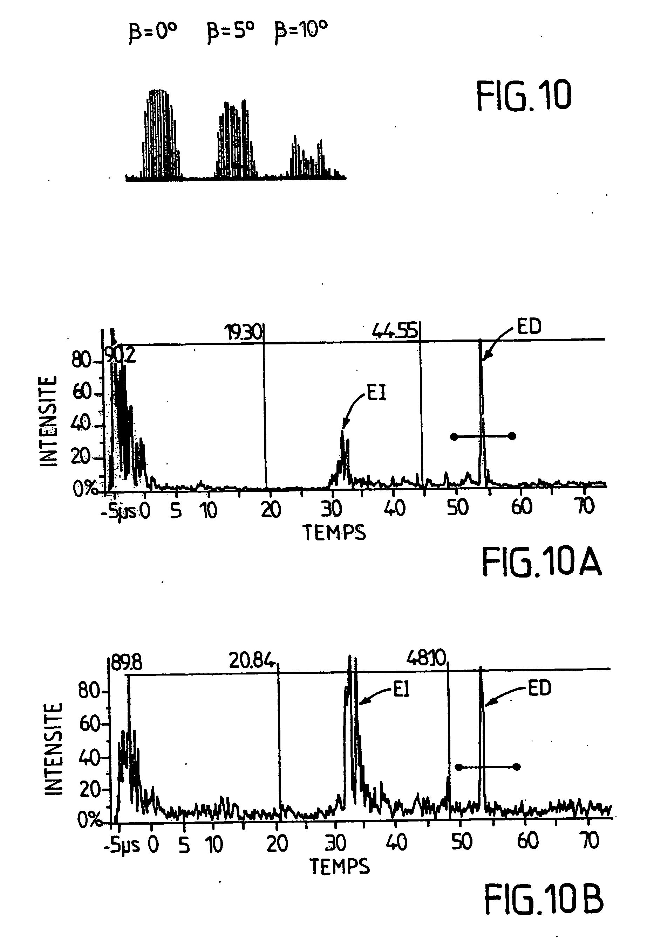

En se référant à la figure 10, l'atténuation de la réponse d'une entaille en fonction de son obliquité (0°, 5° ou 10°) est plus faible que celle obtenue avec des capteurs classiques à un seul élément de largeur voisine de 10 mm. Typiquement, pour un capteur classique, l'atténuation est d'au moins 5 dB pour une entaille de 5°, tandis que les capteurs utilisés ici subissent une atténuation inférieure à 1 dB, pour la même obliquité d'entaille.

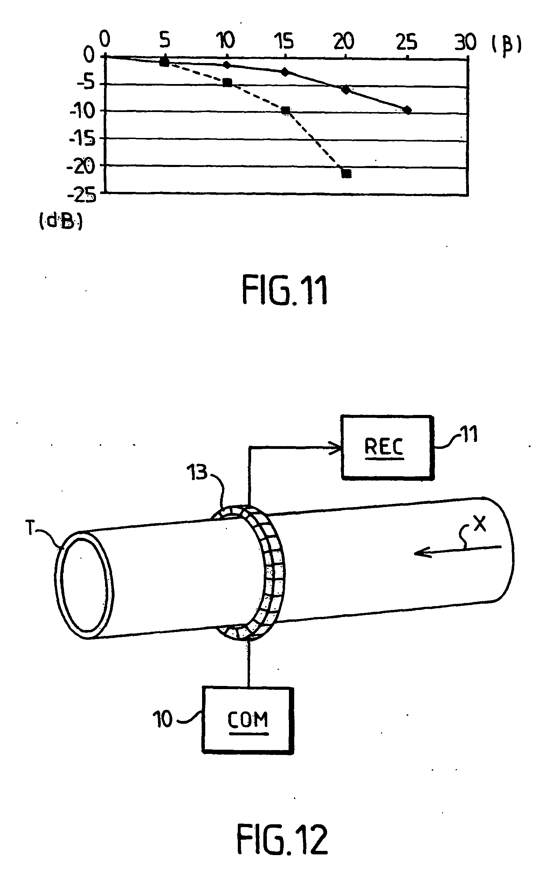

Cependant, pour des obliquités $\beta$ supérieures à +20° ou inférieures à -20° (figure 11), la Demanderesse a constaté une sensibilité un peu moindre, dans les signaux de réponse reconstituée (installation selon l'invention), par rapport au cas où l'on utiliserait une installation multi-tirs, avec le même type de barrette, et avec à chaque fois un tir selon l'obliquité préférentielle recherchée, ce qui donne un "trajet émission-réception adapté".

En fait, dans l'installation selon l'invention, il n'y a pas envoi sur le défaut d'un faisceau défléchi a priori (à l'émission) de l'angle $\alpha$ préférentiel, comme cela peut être fait dans une installation multi-tirs; l'invention procède seulement par remise en phase des signaux reçus, à leur arrivée sur les éléments transducteurs. Ces signaux reçus comprennent la composante réfléchie (exactement, "rétro-diffusée") par le défaut; et c'est la remise en phase qui permet de reconstituer la réponse élémentaire, puis la réponse globale, pour une déflexion $\alpha_T$ donnée.

Mais cette remise en phase à la réception porte sur des signaux qui n'ont pas fait l'objet d'une mise en phase correspondante à l'émission. Il en découle qu'elle porte sur des signaux reçus qui n'ont pas subi exactement le "trajet émission-réception adapté". En règle générale, les essais menés par la Demanderesse ont montré que, dans les conditions opératoires habituelles, l'atténuation relative (d'un élément capteur à l'autre) qui découle de cette différence de trajet était suffisamment faible pour demeurer négligeable, tout du moins dans un certain fourchette d'obliquités.

Le gain à mettre en oeuvre dans l'installation selon l'invention n'est toutefois pas rédhibitoire, et de plus le gain de productivité de contrôle pour plusieurs obliquités contrebalance largement l'inconvénient sur la plus faible sensibilité.

Les figures 10A et 10B montrent un enregistrement A-SCAN d'un même défaut d'obliquité 20°, respectivement sur une installation multi-tirs et sur une installation à traitement dit de "post-acquisition" selon l'invention. Les figures 10A et 10B montrent que les deux types d'installation permettent pareillement de détecter le défaut oblique à 20°; sur ces figures, le signal EI désigne l'écho d'interface eau/acier et le signal ED désigne l'écho de défaut. Le segment de droite d'amplitude 30 % correspond au critère de défaut (porte temporelle et intensité).

La Demanderesse a également effectué des essais dynamiques pour déterminer notamment les zones utiles de détection des capteurs virtuels. Ces essais dynamiques ont été effectués sur les mêmes tubes que précédemment, mais avec une entaille de 20 mm de longueur et une obliquité $\beta=0°$ pour déterminer les trous de détection. Ainsi l'obliquité du défaut n'influe pas sur la mesure. Les essais ont été réalisés à partir du même matériel que pour les essais statiques et d'une cellule mécanique d'installation du type à ajustement de l'angle $\alpha_L$. L'angle $\alpha_L$ a été optimisé sur le signal issu d'un défaut longitudinal externe ($\beta=0°$). La Demanderesse a également utilisé une porte Sofranel 5052GPD avec une bande de fréquence 4-12 MHz.

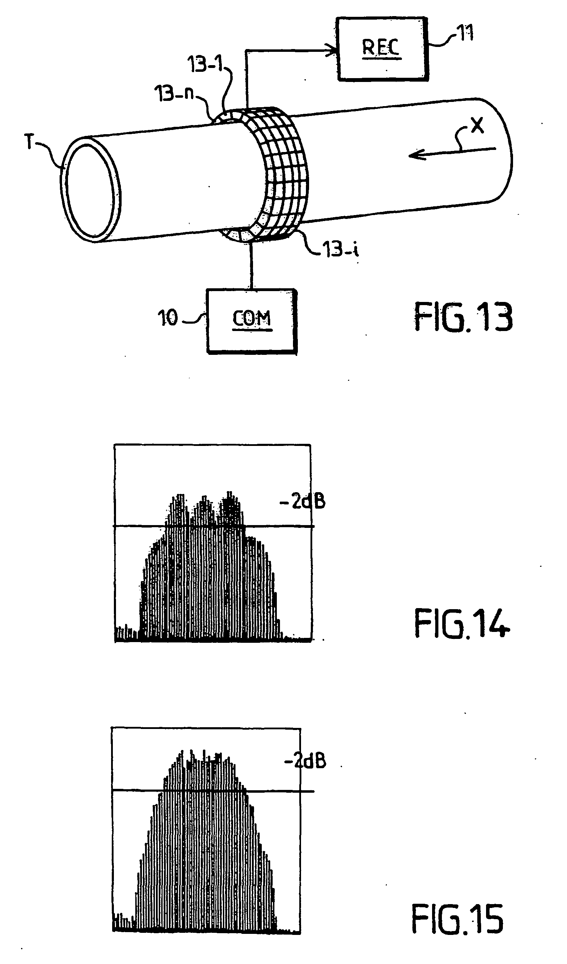

Les figures 14 et 15 montrent la réponse de l'entaille de 20 mm en fonction des positions relatives de l'entaille et de la barrette de 32 éléments de longueur totale 48 mm, pour deux séries d'arrangements de capteur virtuel composé de 8 éléments.

Pour un pas d'imbrication pi= 8 éléments, les arrangements successifs immédiats ne se recouvrent pas et ne se chevauchent pas, comme dans la configuration classique avec des palpeurs de diamètre 15 mm.

La figure 14 montre une zone utile de capteur à - 2dB de 31 mm, soit 65% de la barrette; les trous de détection sont inférieurs à 1,5 dB et ont une longueur suffisamment faible pour ne pas pénaliser la détection d'entailles de 25 mm de longueur.

Pour un pas d'imbrication pi= 4 éléments, les arrangements successifs immédiats se recouvrent ou se chevauchent à 50%. On ne constate plus de trous de détection, mais le nombre d'arrangements et les temps de calcul sont également doublés.

Les essais statiques et dynamiques effectués montrent que l'installation avec traitement post-acquisition selon l'invention permet de détecter des défauts d'obliquité compris entre -20° et 20°.

Pour atteindre des valeurs d'obliquité supérieures à 20°, on peut utiliser l'installation et la méthodologie avec traitement post-acquisition en réalisant un déphasage sur le tir unique de tous les éléments du dispositif capteur de manière à former un faisceau possédant une "déflexion physique à l'émission" non nulle, par exemple de 5°.

Le traitement des signaux captés en retour est semblable au traitement décrit ci-dessus, qui comprend une mémorisation des échantillons Sij, une sélection des valeurs Sij décalées selon une loi de retard et une sommation de ces valeurs décalées pour chaque calcul de réponse reconstituée sous une déflexion $\alpha_T$. Le signal retourné par le défaut est alors moins atténué pour les fortes déflexions $\alpha_T$ et on peut exploiter au mieux les capacités de divergence δ des éléments Ci de la barrette.

Toutefois cette méthode présente certains inconvénients. En effet, l'optimisation de la déflexion $\alpha_L$ n'est plus effectuée sur un défaut droit (β=0°) mais sur un défaut d'obliquité de 20°. De plus, cette méthode ne permet pas de détecter les fortes obliquités positives et négatives et le déplacement des arrangements de capteurs virtuels peut être rendu plus complexe par l'utilisation de tirs avec déphasage à l'émission.

La figure 12 représente un autre mode de réalisation d'une installation selon l'invention destinée à contrôler les défauts longitudinaux sur des tubes. Selon cette figure, le dispositif capteur est constitué d'une barrette linéaire en arc de cercle 13 et les différents éléments du capteur sont disposés le long de l'arc de cercle. Les tubes T à contrôler sont déplacés le long de leur axe et le plan de la barrette est perpendiculaire à l'axe des tubes. On effectue un tir sur l'ensemble des $N_T$ éléments du capteur, avec ou sans déphasage entre éléments. On effectue le même traitement post-acquisition que celui décrit ci-dessus pour déterminer une réponse reconstituée pour une déflexion $\alpha_L$ donnée, et pour différents capteurs virtuels dans la barrette, de manière à réaliser par exemple une rotation électronique du faisceau autour du tube, comme indiqué plus haut.

La figure 13 représente encore un autre mode de réalisation selon l'invention. Sur cette figure, le dispositif capteur est disposé sur une surface cylindrique et est constitué d'une mosaïque ou d'un réseau d'éléments agencés en rangées parallèles entre elles, par exemple 13-1, ...13-i,...13-n, comme illustré. Dans l'exemple, chaque rangée est une génératrice de la surface cylindrique du capteur. Les tubes à contrôler sont déplacés le long de leur axe coaxialement à la surface cylindrique du capteur.

Sur les figures 12 et 13, le circuit de commande (ou circuit amont, pour l'émission) est noté 10, et l'ensemble de réception (ou circuit aval) est noté 13.

Le circuit amont 10 est agencé pour produire un même tir de tous les éléments transducteurs, avec ou sans déphasage entre éléments voisins. Dans le cas de la figure 13, par exemple, on peut réaliser un déphasage entre rangées successives de façon à former un faisceau incliné de manière optimale dans le plan de section droite des tubes (déflexion $\alpha_L$ voisine de 17°), mais sans déphasage entre éléments d'une même rangée, et réaliser une rotation électronique du faisceau autour du tube en utilisant différents capteurs virtuels.

On effectue un traitement post-acquisition sur les signaux en retour mémorisés, selon l'invention, pour reconstituer un signal de réponse pour des angles $\alpha_L$ optimisés (environ 17°) et des angles $\alpha_T$ compris entre -5° et +5°.

Une telle installation à capteur mosaïque permet de contrôler plusieurs obliquités de défauts à cadence élevée (de -20° à 20°) avec une avance rectiligne des tubes dans l'installation contrairement aux installations décrites précédemment qui utilisent une avance hélicoïdale pour détecter des défauts obliques.

On peut aussi choisir sur cette installation des lois pour défléchir, de manière variable mais choisie, le faisceau en retour suivant une section droite des tubes ou suivant un plan longitudinal des tubes pour optimiser les angles $\alpha_T$ et $\alpha_L$ (par exemple $\alpha_L$=17° avec $\alpha_T$=0°, $\alpha_L$=13° avec $\alpha_T$=11°).

Il est possible d'utiliser des capteurs virtuels bidimensionnels sur cette installation. Dans ce cas, les capteurs sont déplacés d'un pas d'imbrication pi présentant une composante axiale et une composante circonférentielle.

Annexes

A1

| Déflexion $\alpha_1$ (°) | Gain (dB) | Amplitude de l'écho sur l'entaille selon l'obliquité (%) | | | | | | |
|---|---|---|---|---|---|---|---|---|
| | | 0 | 5 | 10 | 15 | 20 | 25 | 45 |
| 0 | 14,4 | **90** | 50 | 10 | | | | |
| 1 | 15,4 | 70 | **90** | 40 | 15 | | | |

(suite)

| Déflexion $\alpha_1$ (°) | Gain (dB) | Amplitude de l'écho sur l'entaille selon l'obliquité (%) | | | | | | |
|---|---|---|---|---|---|---|---|---|
| | | 0 | 5 | 10 | 15 | 20 | 25 | 45 |
| 3 | 15,8 | 10 | 55 | **90** | 55 | 20 | | |
| 4 | 16,8 | | 20 | 75 | **90** | 30 | 10 | |
| 5 | 20 | | | 55 | >100 | **90** | 30 | |
| 7 | 23,5 | | | 10 | 40 | 83 | **90** | |

A2

| Double Déflexion $2\alpha_T$ (°) | Gain (dB) | Amplitude de l'écho sur l'entaille selon l'obliquité (%) | | | | | | |
|---|---|---|---|---|---|---|---|---|
| | | 0 | 5 | 10 | 15 | 20 | 25 | 45 |
| 0 | 11 | **90** | 53 | 10 | | | | |
| 3 | 12 | 20 | **90** | 20 | | | | |
| 6 | 15,5 | | 20 | **90** | 10 | | | |
| 8 | 20,5 | 25 | 20 | 35 | **90** | 10 | | |
| 11 | 32,2 | 80 | 50 | 35 | 50 | **90** | | |
| 16 | 40 | >100 | >100 | 90 | 65 | 65 | **70** | |

## Revendications

1. Installation de contrôle non destructif pour produits métallurgiques, en particulier à couplage indirect, comprenant :

   - un dispositif capteur ultrasonore (3) comprenant un ensemble d'éléments transducteurs ultrasonores (Ci), accessibles sélectivement,
   - un circuit amont (1), propre à exciter sélectivement les éléments transducteurs à des instants choisis,
   - un circuit aval (2,4), propre à recueillir les signaux captés en retour par les éléments transducteurs, et
   - un composant de traitement (5) propre à analyser les signaux captés, en tant que réponse globale (7) d'un produit métallurgique à une excitation ultrasonore,
   
   **caractérisée en ce que** le circuit amont (1) est agencé pour opérer par tirs, associés à une même loi temporelle d'excitation des éléments transducteurs,
   
   **en ce que** le circuit aval (2,4) comprend une mémoire (4), et est agencé pour mémoriser des échantillons des signaux captés (Sij) par chaque élément transducteur, en correspondance de chaque tir, sur une profondeur temporelle choisie,
   
   **en ce que** le composant de traitement est apte à coopérer avec cette mémoire afin:

   - pour chaque tir, de lire et sommer (5) répétitivement des groupes d'échantillons (Sij) correspondant à différents éléments transducteurs (Ci), ainsi qu'à des instants (tj) décalés d'un élément à l'autre, et ceci selon une loi temporelle de traitement choisie, propre à chaque répétition, ce qui permet de calculer pour chaque tir une pluralité de réponses reconstituées ($S_T$, $\alpha_T$) dont chacune correspondrait à une déflexion $\alpha_T$ à l'émission, et
   - d'analyser la réponse globale constituée par l'ensemble de ces réponses reconstituées, et

   **en ce que** les éléments transducteurs ultrasonores (Ci) sont de divergence ($\delta$) au moins égale à l'angle de déflexion maximal, pour les différentes réponses reconstituées.

2. Installation selon la revendication 1, **caractérisée en ce que** le circuit aval comprend un bloc de numérisation (2) des signaux captés par chacun des éléments (Ci) du dispositif capteur (3).

**3.** Installation selon la revendication 2, **caractérisée en ce que** la mémoire (4) est agencée pour coopérer avec le bloc de numérisation (2) en vue de stocker, en fonction d'instants successifs, d'une part, et d'éléments transducteurs actifs, d'autre part, les échantillons des signaux (Sij) captés par chaque élément transducteur.

**4.** Installation selon l'une des revendications 1 à 3, **caractérisée en ce que** le composant de traitement comporte des moyens de calcul (5) capables de définir des répartitions de retards à appliquer respectivement aux signaux captés, pour obtenir, pour chaque répartition, une réponse reconstituée qui correspondrait à un tir suivant une déflexion de faisceau choisie ($\alpha_T$).

**5.** Installation selon l'une des revendications 3 et 4, **caractérisée en ce que** le composant de traitement comporte des moyens de sélection lui permettant d'accéder à la mémoire en fonction des temps associés aux échantillons, pour chaque élément transducteur.

**6.** Installation selon l'une des revendications précédentes, **caractérisée en ce que** le circuit amont (1) est muni d'une loi temporelle d'excitation qui correspond à une excitation des éléments transducteurs (Ci), sensiblement sans déphasage entre eux.

**7.** Installation selon l'une des revendications précédentes, **caractérisée en ce que** le circuit amont (1) est muni d'une loi temporelle d'excitation qui correspond à une excitation des éléments transducteurs (Ci), avec, entre eux, des déphasages définissant un faisceau défléchi à l'émission, et **en ce que**, en présence de cette loi temporelle d'excitation, le composant de traitement (5) est agencé pour définir des répartitions de retards à appliquer aux signaux captés, en tenant compte des déphasages entre éléments transducteurs à l'excitation, de sorte que les réponses reconstituées correspondent chacune à une déflexion $\alpha_T$ centrée autour de l'angle de déflexion physique du faisceau à l'émission.

**8.** Installation selon l'une des revendications précédentes, **caractérisé en ce que** chaque groupes d'échantillons (Sij) sommés correspond à un sous-ensemble choisi d'éléments transducteurs, dit capteur virtuel.

**9.** Installation selon la revendication 8, **caractérisé en ce que** le composant de traitement (5) est agencé pour calculer plusieurs réponses reconstituées élémentaires du produit au même tir sous la même déflexion $\alpha_T$, pour différents sous-ensembles du dispositif capteur.

**10.** Installation selon la revendication 9, **caractérisé en ce que** le composant de traitement (5) est agencé pour calculer la réponse reconstituée sous la forme d'une fonction des réponses reconstituées élémentaires pour une même déflexion $\alpha_T$ et pour différents sous-ensembles du dispositif capteur.

**11.** Installation selon la revendication 10, **caractérisé en ce que** la réponse reconstituée du produit au tir sous une déflexion $\alpha_T$ est la réponse élémentaire qui présente une amplitude de pic maximale.

**12.** Installation selon l'une des revendications 8 à 11, **caractérisé en ce que** le composant de traitement (5) est agencé pour calculer des réponses reconstituées pour différentes déflexions $\alpha_T$, avec différents sous-ensembles du dispositif capteur.

**13.** Installation selon l'une des revendications 8 à 12, **caractérisée en ce que** les différents sous-ensembles du dispositif capteur, pour calculer une réponse reconstituée du produit au tir sous une déflexion $\alpha_T$ comportent sensiblement un même nombre ($N_v$) d'éléments transducteurs.

**14.** Installation selon la revendication 13, **caractérisée en ce que** les sous-ensembles du dispositif capteur sont choisis dans celui-ci en excluant à chaque bout une bande de garde dont le nombre d'éléments transducteurs est voisin de la moitié ($N_v/2$) du nombre d'éléments transducteurs d'un sous-ensemble.

**15.** Installation selon l'une des revendications 13 et 14, **caractérisée en ce que** deux sous-ensembles consécutifs se déduisent l'un de l'autre par une translation d'un pas pi, dit pas d'imbrication.

**16.** Installation selon la revendication 15, **caractérisée en ce que** deux sous-ensembles consécutifs comprennent des éléments communs.

**17.** Installation selon l'une des revendications 8 à 16, **caractérisée en ce que** le nombre choisi de sous-ensembles du dispositif capteur pour calculer une réponse reconstituée sous une déflexion $\alpha_T$ correspond sensiblement au nombre maximal de sous-ensembles possibles pour le pas d'imbrication pi choisi et pour le nombre $N_v$ d'éléments choisis parmi ($N_T$-$N_v$) éléments.

18. Installation selon l'une des revendications précédentes, destinée au contrôle de produits métallurgiques du type tubes en acier (T), **caractérisée en ce qu'**elle comporte des moyens d'entraînement des tubes selon un mouvement hélicoïdal autour de l'axe des tubes et **en ce que** le dispositif capteur ultrasonore est réalisé sous la forme d'une barrette linéaire (3) d'éléments transducteurs, disposée sensiblement parallèlement à l'axe du tube (T) et agencée pour que le faisceau ultrasonore à l'émission possède une déflexion choisie ($\alpha_L$) dans un plan de section transversale du tube (T), ce qui permet de détecter notamment des défauts obliques.

19. Installation selon l'une des revendications 1 à 17, destinée an contrôle de produits métallurgiques du type tubes en acier, **caractérisée en ce qu'**elle comporte des moyens d'entraînement des tubes (T) selon un mouvement rectiligne le long de leur axe, et **en ce que** le dispositif capteur ultrasonore est réalisé sous la forme d'une barrette linéaire (3) d'éléments transducteurs, disposée sensiblement parallèlement à l'axe du tube (T) et agencée pour que le faisceau ultrasonore à l'émission possède une déflexion choisie ($\alpha_L$) dans un plan de section transversale du tube (T), la barrette étant mise en rotation autour du tube, ce qui permet de détecter notamment des défauts obliques.

20. Installation selon l'une des revendications 1 à 17, destinée au contrôle de produits métallurgiques du type tubes en acier, **caractérisée en ce qu'**elle comporte des moyens d'entraînement des tubes (T) selon un mouvement rectiligne le long de leur axe, et **en ce que** le dispositif capteur ultrasonore est réalisé sous la forme d'une barrette (3) d'éléments transducteurs, sensiblement en arc de cercle, disposée autour d'un tube (T), ce qui permet de détecter notamment des défauts longitudinaux.

21. Installation selon l'une des revendications 1 à 17, **caractérisée en ce qu'**elle comporte des moyens d'entraînement des tubes (T) selon un mouvement rectiligne le long de leur axe, et **en ce que** le dispositif capteur ultrasonore comprend un réseau d'éléments transducteurs (13) agencés sensiblement selon une surface cylindrique coaxiale à un tube (T), en plusieurs rangées d'éléments parallèles entre elles et à l'axe du tube (T), et **en ce que** le circuit aval et son composant de traitement sont aptes à déterminer des répartitions de retards sur les signaux captés en retour par les éléments d'un sous-ensemble ou de l'ensemble du réseau, ce qui permet de détecter notamment des défauts obliques.

22. Installation selon l'une des revendications précédentes, **caractérisée en ce que** le composant de traitement est incorporé au circuit aval.

**Claims**

1. Installation for the non-destructive control of metallurgical products, in particular with indirect coupling, comprising:

   - an ultrasound sensor device (3) comprising a set of selectively accessible ultrasound transducer elements (Ci),
   - an upstream circuit (1) capable of selectively exciting the transducer elements at selected instants,
   - a downstream circuit (2, 4) capable of collecting the signals sensed on return by the transducer elements, and
   - a processing component (5) capable of analysing the signals sensed, as a global response (7) of a metallurgical product to ultrasound excitation,

   **characterised in that** the upstream circuit (1) is arranged to operate by bursts, which are associated with the same temporal law of excitation of the transducer elements,
   **in that** the downstream circuit (2, 4) comprises a memory (4) and is arranged to store samples of the signals sensed (Sij) by each transducer element, in correspondence with each burst, to a selected temporal depth,
   **in that** the processing component is suitable for cooperating with the memory in order:

   - for each burst, to read and add up (5) repetitively groups of samples (Sij) corresponding to different transducer elements (Ci), and also to instants (tj) staggered from one element to the other, according to a selected temporal processing law, peculiar to each repetition, which makes it possible to calculate for each burst a plurality of reconstituted responses ($S_T$, $a_T$), each of which would correspond to a deflection $a_T$ on emission,
   - to analyse the global response constituted by those reconstituted responses as a whole, and **in that** the ultrasound transducer elements (Ci) have a divergence (d) at least equal to the maximum angle of deflection, for the various reconstituted responses.

2. Installation according to claim 1, **characterised in that** the downstream circuit comprises a digitalisation unit (2) for the signals sensed by each of the elements (Ci) of the sensor device (3).

3. Installation according to claim 2, **characterised in that** the memory (4) is arranged to co-operate with the digitalisation unit (2) with a view to storing, as a function of successive instants, on the one hand, and active transducer elements, on the other hand, the samples of the signals (Sij) sensed by each transducer element.

4. Installation according to any one of claims 1-3, **characterised in that** the processing component comprises calculation means (5) capable of defining distributions of delays to be applied, respectively, to the sensed signals, in order to obtain, for each distribution, a reconstituted response which would correspond to a burst according to a selected beam deflection ($a_T$).

5. Installation according to any one of claims 3 and 4, **characterised in that** the processing component comprises selection means enabling it to gain access to the memory as a function of the times associated with the samples, for each transducer element.

6. Installation according to any one of the preceding claims, **characterised in that** the upstream circuit (1) is provided with a temporal excitation law which corresponds to an excitation of the transducer elements (Ci), substantially without a phase shift between them.

7. Installation according to any one of the preceding claims, **characterised in that** the upstream circuit (1) is provided with a temporal excitation law which corresponds to an excitation of the transducer elements (Ci), with, between them, phase shifts defining a beam deflected on emission, and **in that**, in view of that temporal excitation law, the processing component (5) is arranged to define distributions of delays to be applied to the sensed signals, taking into account the phase shifts between transducer elements on excitation, so that the reconstituted responses each correspond to a deflection $a_T$ centred around the angle of physical deflection of the beam on emission.

8. Installation according to any one of the preceding claims, **characterised in that** each group of samples (Sij) added up corresponds to a selected sub-set of transducer elements, called a virtual sensor.

9. Installation according to claim 8, **characterised in that** the processing component (5) is arranged to calculate several elemental reconstituted responses of the product to the same burst under the same deflection $a_T$, for different sub-sets of the sensor device.

10. Installation according to claim 9, **characterised in that** the processing component (5) is arranged to calculate the reconstituted response in the form of a function of the elemental reconstituted responses for the same deflection $a_T$ and for different sub-sets of the sensor device.

11. Installation according to claim 10, **characterised in that** the reconstituted response of the product to the burst under a deflection $a_T$ is the elemental response that has a maximum peak amplitude.

12. Installation according to any one of claims 8 to 11, **characterised in that** the processing component (5) is arranged to calculate reconstituted responses for different deflections $a_T$, with different sub-sets of the sensor device.

13. Installation according to any one of claims 8 to 12, **characterised in that** the various sub-sets of the sensor device, for calculating a reconstituted response of the product to the burst under a deflection $a_T$, comprise substantially the same number ($N_v$) of transducer elements.

14. Installation according to claim 13, **characterised in that** the sub-sets of the sensor device are selected from the sensor device while excluding at each end a guard band, of which the number of transducer elements is approximately half ($N_v/2$) the number of transducer elements of a sub-set.

15. Installation according to any one of claims 13 and 14, **characterised in that** two consecutive sub-sets are derived from one another by a translation by a pitch pi, called the imbrication pitch.

16. Installation according to claim 15, **characterised in that** two consecutive sub-sets comprise common elements.

17. Installation according to any one of claims 8 to 16, **characterised in that** the selected number of sub-sets of the sensor device for calculating a reconstituted response under a deflection $a_T$ corresponds substantially to the maximum number of possible sub-sets for the selected imbrication pitch pi and for the number $N_v$ of elements selected from $(N_T-N_v)$ elements.

18. Installation according to any one of the preceding claims, which is intended for the control of metallurgical products of the steel tube type (T), **characterised in that** it comprises means for actuating the tubes in accordance with a helical movement about the axis of the tubes and **in that** the ultrasound sensor device is constructed in the form of a linear bar (3) of transducer elements which is disposed substantially parallel with the axis of the tube (T) and which is arranged in such a manner that the ultrasound beam on emission has a selected deflection ($a_L$) in a cross-sectional plane of the tube (T), which enables, in particular, oblique defects to be detected.

19. Installation according to any one of claims 1 to 17, which is intended for the control of metallurgical products of the steel tube type, **characterised in that** it comprises means for actuating the tubes (T) in accordance with a rectilinear movement along their axis and **in that** the ultrasound sensor device is constructed in the form of a linear bar (3) of transducer elements which is disposed substantially parallel with the axis of the tube (T) and which is arranged in such a manner that the ultrasound beam on emission has a selected deflection ($a_L$) in a cross-sectional plane of the tube (T), the bar being set in rotation about the tube, which enables, in particular, oblique defects to be detected.

20. Installation according to any one of claims 1 to 17, which is intended for the control of metallurgical products of the steel tube type, **characterised in that** it comprises means for actuating the tubes (T) in accordance with a rectilinear movement along their axis, and **in that** the ultrasound sensor device is constructed in the form of a bar (3) of transducer elements, substantially in the shape of an arc of a circle, arranged around a tube (T), which enables, in particular, longitudinal defects to be detected.

21. Installation according to any one of claims 1 to 17, **characterised in that** it comprises means for actuating the tubes (T) in accordance with a rectilinear movement along their axis, and **in that** the ultrasound sensor device comprises a network of transducer elements (13) which are arranged substantially in accordance with a cylindrical surface coaxial with a tube (T), in several rows of elements, which rows are parallel with one another and with the axis of the tube (T), and **in that** the downstream circuit and its processing component are capable of determining distributions of delays on the signals sensed on return by the elements of a sub-set or of the whole of the network, which enables, in particular, oblique defects to be detected.

22. Installation according to any one of the preceding claims, **characterised in that** the processing component is incorporated in the downstream circuit.

**Patentansprüche**

1. Einrichtung zur zerstörungsfreien Prüfung metallurgischer Produkte, insbesondere mit indirekter Einkopplung, mit:

- einer Ultraschall-Erfassungsvorrichtung (3) mit einer Gruppe von Ultraschallwandlerelementen (Ci), auf die selektiv zugegriffen werden kann,
- einer vorgeschalteten Schaltung (1) zur selektiven Anregung der Wandlerelemente zu gewählten Zeitpunkten,
- einer nachgeschalteten Schaltung (2, 4) zum Sammeln der von den Wandlerelementen zurückkommenden erfassten Signale, und
- einer Verarbeitungseinheit (5) zum Analysieren der erfassten Signale als ein globaler Response (7) eines metallurgischen Produktes auf eine Ultraschallanregung,

**dadurch gekennzeichnet, dass** die vorgeschaltete Schaltung (1) so ausgebildet ist, dass sie schussweise arbeitet und ein und derselben zeitlichen Gesetzmäßigkeit der Anregung der Wandlerelemente folgt,
dadurch, dass die nachgeschaltete Schaltung (2, 4) einen Speicher (4) aufweist und ausgebildet ist, um Proben von von jedem Wandlerelement erfassten Signalen (Sij) entsprechend jedem Schuss in einer gewählten zeitlichen Tiefe zu speichern,
dadurch, dass die Verarbeitungseinheit mit diesem Speicher zusammenarbeiten kann, um:

- für jeden Schuss Gruppen von Proben (Sij) wiederholt zu lesen und aufzuaddieren (5), wobei die Proben verschiedenen Wandlerelementen (Ci) entsprechen, sowie von einem Element zum anderen versetzten Zeitpunkten (tj) und dies gemäß einer gewählten zeitlichen Verarbeitungsgesetzmäßigkeit für jede Wiederholung, wodurch es ermöglicht wird, für jeden Schuss eine Mehrzahl von wiederhergestellten Erwiderungen ($S_T$, $\mathbb{?}_T$)

zu berechnen, die jeweils einer Ablenkung $\mathbb{?}_T$ einer Abstrahlung entsprichen, und
- um den aus der Gruppe der wiederhergestellten Erwiderungen gebildeten globalen Response zu analysieren, und

dadurch, dass die Ultraschallwandlerelemente (Ci) eine Divergenz ($\delta$) aufweisen, die mindestens gleich dem maximalen Ablenkungswinkel für verschiedene wiederhergestellte Erwiderungen ist.

2. Einrichtung nach Anspruch 1, **dadurch gekennzeichnet, dass** die nachgeschaltete Schaltung einen Block (2) zur Digitalisierung von Signalen aufweist, die von jedem der Elemente (Ci) der Erfassungsvorrichtung (3) erfasst wurden.

3. Einrichtung nach Anspruch 2, **dadurch gekennzeichnet, dass** der Speicher (4) ausgebildet ist, um mit dem Digitalisierungsblock (2) zusammenzuarbeiten, um in Abhängigkeit von aufeinanderfolgenden Zeitpunkten einerseits und in Abhängigkeit von aktiven Wandlerelementen andererseits Proben von Signalen (Sij), die von jedem Wandlerelement erfasst wurden, zu speichern.

4. Einrichtung nach einem der Ansprüche 1 bis 3, **dadurch gekennzeichnet, dass** die Verarbeitungseinheit Rechenmittel (5) aufweist, die Verteilungen von Verzögerungen, die jeweils den erfassten Signalen aufzuerlegen sind, definieren können, um für jede Verteilung eine wiederhergestellte Erwiderung zu erhalten, die einem Schuss gemäß einer gewählten Ablenkung ($\mathbb{?}_T$) eines Bündels entspricht.

5. Einrichtung nach einem der Ansprüche 3 und 4, **dadurch gekennzeichnet, dass** die Verarbeitungseinheit Auswahlmittel aufweist, die es ihr ermöglichen, auf den Speicher in Abhängigkeit von den Proben zugeordneten Zeitpunkten für jedes Wandlerelement zuzugreifen.

6. Einrichtung nach einem der vorstehenden Ansprüche, **dadurch gekennzeichnet, dass** die vorgeschaltete Schaltung (1) mit einer zeitlichen Anregungsgesetzmäßigkeit versehen ist, die einer Erregung der Wandlerelemente (Ci) im Wesentlichen ohne Phasenverschiebung zwischen ihnen entspricht.

7. Einrichtung nach einem der vorstehenden Ansprüche, **dadurch gekennzeichnet, dass** die vorgeschaltete Schaltung (1) mit einer zeitlichen Erregungsgesetzmäßigkeit versehen ist, die einer Erregung der Wandlerelemente (Ci) mit Phasenverschiebungen zwischen ihnen entspricht, wobei die Phasenverschiebungen einem bei der Aussendung abgelenkten Bündel entsprechen, und dadurch, dass in Anwesenheit dieser zeitlichen Erregungsgesetzmäßigkeit die Verarbeitungseinheit (5) ausgebildet ist zum Definieren von Verzögerungsverteilungen, die auf die erfassten Signale anzuwenden sind unter Berücksichtigung der Phasenverschiebungen zwischen den Wandlerelementen bei der Erregung, derart, dass die wiederhergestellten Erwiderungen jeweils einer Ablenkung $\mathbb{?}_T$ entsprechen, die um den physischen Ablenkungswinkel des Strahls bei der Aussendung zentriert ist.

8. Einrichtung nach einem der vorstehenden Ansprüche, **dadurch gekennzeichnet, dass** jede Gruppe von aufaddierten Proben (Sij) einer aus den Wandlerelementen gewählten Untergruppe entspricht, die virtueller Sensor genannt wird.

9. Einrichtung nach Anspruch 8, **dadurch gekennzeichnet, dass** die Verarbeitungseinheit (5) ausgebildet ist zum Berechnen mehrerer wiederhergestellter elementarer Erwiderungen des Produktes während desselben Schusses unter demselben Ablenkungswinkel $\mathbb{?}_T$ für verschiedene Untergruppen der Erfassungsvorrichtung.

10. Einrichtung nach Anspruch 9, **dadurch gekennzeichnet, dass** die Verarbeitungseinheit (5) ausgebildet ist zum Berechnen der wiederhergestellten Erwiderung in Form einer Funktion der wiederhergestellten elementaren Erwiderungen für eine selbe Ablenkung $\mathbb{?}_T$ und für verschiedene Untergruppen der Erfassungsvorrichtung.

11. Einrichtung nach Anspruch 10, **dadurch gekennzeichnet, dass** die wiederhergestellte Erwiderung des Produkts auf einen Schuss unter einer Ablenkung $\mathbb{?}_T$ die elementare Erwiderung ist, die einer Amplitude eines maximalen Spitzenwertes entspricht.

**12.** Einrichtung nach einem der Ansprüche 8 bis 11, **dadurch gekennzeichnet, dass** die Verarbeitungseinheit (5) ausgebildet ist zum Berechnen wiederhergestellter Erwiderungen für verschiedene Ablenkungen $\theta_T$ mit verschiedenen Untergruppen der Erfassungsvorrichtung.

**13.** Einrichtung nach einem der Ansprüche 8 bis 12, **dadurch gekennzeichnet, dass** die verschiedenen Untergruppen der Erfassungsvorrichtung im Wesentlichen eine gleiche Anzahl ($N_v$) von Wandlerelementen aufweisen, um eine wiederhergestellte Erwiderung des Produktes während eines Schusses unter einer Ablenkung $\theta_T$ zu berechnen.

**14.** Einrichtung nach Anspruch 13, **dadurch gekennzeichnet, dass** die Untergruppen der Erfassungsvorrichtung in dieser ausgewählt sind unter Ausschluss eines Sicherheitsstreifens an jedem ihrer Enden, dessen Anzahl an Wandlerelementen etwa der Hälfte ($N_v/2$) der Anzahl der Wandlerelemente einer Untergruppe entspricht.

**15.** Einrichtung nach einem der Ansprüche 13 und 14, **dadurch gekennzeichnet, dass** zwei aufeinanderfolgende Untergruppen gegeneinander um einen Translationsschritt *pi*, genannt Überschneidungsschritt, versetzt sind.

**16.** Einrichtung nach Anspruch 15, **dadurch gekennzeichnet, dass** zwei aufeinanderfolgende Untergruppen gemeinsame Elemente aufweisen.

**17.** Einrichtung nach einem der Ansprüche 8 bis 16, **dadurch gekennzeichnet, dass** die gewählte Anzahl der Untergruppen der Erfassungsvorrichtung zum Berechnen einer wiederhergestellten Erwiderung unter einer Abtenkung $\theta_T$ im Wesentlichen der maximal möglichen Anzahl von Untergruppen für einen gewählten Überschneidungsschritt und für die Anzahl $N_v$ von unter ($N_T-N_v$) Elementen gewählten Elementen $N_v$ entspricht.

**18.** Einrichtung nach einem der vorstehenden Ansprüche zum Prüfen metallurgischer Produkte vom Typ Stahlrohr (T), **dadurch gekennzeichnet, dass** sie Antriebsmittel der Rohre aufweist, die die Rohre in eine spiralförmige Bewegung um deren Achse versetzen, und dadurch, dass die Ultraschallerfassungsvorrichtung in Form einer linearen Leiste (3) von Wandlerelementen realisiert ist, die im Wesentlichen parallel zur Achse des Rohres (T) angeordnet ist, und die so ausgebildet ist, dass das ausgesendete Ultraschallbündel eine gewählte Ablenkung ($\theta_L$) in einer Querschnittsebene des Rohrs (T) aufweist, wodurch insbesondere schräg liegende Defekte erfasst werden können.

**19.** Einrichtung nach einem der Ansprüche 1 bis 17 zum Prüfen metallurgischer Produkte vom Typ Stahlrohr, **dadurch gekennzeichnet, dass** sie Antriebsmittel für die Rohre (T) aufweist, die die Rohre in eine geradlinige Bewegung entlang deren Achse versetzen, und dadurch, dass die Ultraschall-Erfassungsvorrichtung in Form einer linearen Leiste (3) aus Wandlerelementen realisiert ist, die im Wesentlichen parallel zur Achse des Rohrs (T) angeordnet ist und die so ausgebildet ist, dass das ausgesendete Ultraschallbündel eine gewählte Ablenkung ($\theta_L$) in einer Querschnittsebene des Rohrs (T) aufweist, wobei die Leiste um das Rohr herum in eine Rotationsbewegung versetzt wird, was es erlaubt, insbesondere schräg liegende Fehler zu erfassen.

**20.** Einrichtung nach einem der Ansprüche 1 bis 17 zur Prüfung metallurgischer Produkte vom Typ Stahlrohre, **dadurch gekennzeichnet, dass** sie Antriebsmittel für die Rohre (T) aufweist, die die Rohre in eine geradlinige Bewegung entlang ihrer Achse versetzen, und dadurch, dass die Ultraschall-Erfassungsvorrichtung in Form einer Leiste (3) von Wandlerelementen realisiert ist, die im Wesentlichen kreisbogenförmig ist und um das Rohr (T) herum angeordnet ist, was es ermöglicht, insbesondere längs verlaufende Fehler zu erfassen.

**21.** Einrichtung nach einem der Ansprüche 1 bis 17, **dadurch gekennzeichnet, dass** sie Antriebsmittel für die Rohre (T) aufweist, die die Rohre in eine geradlinige Bewegung entlang ihrer Achse versetzen, und dadurch, dass die Ultraschall-Erfassungsvorrichtung ein Netzwerk von Wandlerelementen (13) aufweist, die im Wesentlichen auf einer zu einem Rohr (T) koaxialen Zylinderfläche in mehreren Reihen von zueinander und zu der Achse des Rohres (T) parallelen Elementen angeordnet sind, und dadurch, dass die nachgeschaltete Schaltung und ihre Verarbeitungseinheit die Verteilungen der Verzögerungen der erfassten Erwiderungssignale durch die Elemente einer Untergruppe oder durch die Gesamtheit des Netzwerks erfassen kann, was es ermöglicht, insbesondere schräg liegende Fehler zu erfassen.

**22.** Einrichtung nach einem der vorstehenden Ansprüche, **dadurch gekennzeichnet, dass** die Verarbeitungseinheit in die nachgeschaltete Schaltung eingefügt ist.

FIG.1

FIG.2A

FIG.2B

FIG.3

FIG.4

FIG.5

FIG.6

FIG.7

FIG.8

FIG.9

β=0°    β=5°    β=10°

FIG.10

FIG.10A

FIG.10B

FIG.11

FIG.12

FIG.13

FIG.14

FIG.15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2796153 A
- EP 0841580 A2
- US 3924453 A